# EUROPEAN PATENT SPECIFICATION

(11) **EP 0 634 831 B1**
(45) Date of publication and mention of the grant of the patent: **22.07.1998**
(21) Application number: 94905242.7
(22) Date of filing: 01.02.1994
(51) Int. Cl.: H02K 37/04, H02K 37/18

(54) **STEPPING MOTOR OF MULTIPHASE HYBRID TYPE AND DRIVE ARRANGEMENT**
SCHRITTMOTOR DER HYBRIDISCHEN MEHRPHASIGEN BAUART UND ANTRIEBSSYSTEM
MOTEUR PAS-A-PAS DE TYPE HYBRIDE MULTIPHASE ET SYSTEME D'ENTRAINEMENT

(30) Priority: 01.02.1993 JP 36056/93
(43) Date of publication of application: 18.01.1995
(73) Proprietor: MINEBEA CO., LTD., Kitasaku-gun, Nagano 389-02 (JP)
(72) Inventor: YOSHIMURA, Noriyuki, M. C. L., Miyota-cho, Kitasaku-gun, Nagano 389-02 (JP); YOSHIDA, Kenji, Minebea Co. Ltd., Miyota-cho, Kitasaku-gun, Nagano 389-02 (JP)
(74) Representative: Jackson, Peter Arthur
(86) International application number: JP9400138
(87) International publication number: WO9418742

(56) References cited:
- EP-A- 0 581 612
- DE-A- 2 342 994
- JP-A-61 185 056
- JP-B- 1 032 748
- JP-U-60 111 382
- US-A- 4 000 452

## Description

### PRIOR ART

The present invention relates to an improved 5-phase hybrid stepping motor and drive arrangement.

### BACKGROUND OF THE INVENTION

Hybrid stepping motors have been well known for over a quarter of the century as actuators appropriated for highly accurate positioning movements. The hybrid stepping motors are widely used in various machine tools, e.g. with fully automated production lines, as well as computer related instruments including printers, plotters, facsimile machines and disk drive units.

US-A-4 000 452 discloses a 5 phase hybrid stepper motor which has a rotor an axially magnetised permanent magnet and two pole caps mounted one on each end of the permanent magnet. Each pole cap is made of soft maanetic material and has a plurality Z_{R} of teeth arranged at equal intervals on its circumferential surface. The teeth of the two pole caps are displaced by 1/2 of the teeth pitch (1/2 T_{R}) from each other. The motor stator has a plurality of stator segments disposed around the rotor. Each asymmetrical stator segment has ten fixed magnetic poles extending radially inwardly, each having a winding with no taps wound on it and each having four small teeth arranged at the same pitch as of the teeth of the rotor. In the main embodiment the total number of the stator teeth is 40 and the total number of rotor teeth is 50. A number of different ways are disclosed for connecting the stator windings together and to a power supplv.

European patent application number 93 306 065.9 was published after the filing of the present application, but was filed on 30/07/93 claiming a priority date of 31/07/92 from a Japanese application JP 224844/92. Its content as filed is therefore comprised in the state of the art pursuant to Article 54(3) and (4) EPC. The application discloses a multiphase hybrid stepper motor generally similar to that in US-A-4 000 452 but with an asmmetrical stator in which the number of pole teeth is increased by one on alternate poles.

For increasing the versatility in use, there is made an attempt to minimize the step angle of such a hybrid stepping motor. To this respect, four- and five-phase types of the stepping motor are now commonly provided.

The conventional four- or five-phase stepping motors however have some disadvantages that torque stiffness is unstable, that static torque is varied depending on the stop position, and that the step angle is not at a high accuracy. It is an object of the present invention to eliminate the foregoing disadvantages.

### SUMMARY OF THE INVENTION

For achievement of the above object, a multi-phase hybrid type stepping motor and drive arrangement is provided according to claim 1.

### BRIEF DESCRIPTION OF THE DRAWINGS

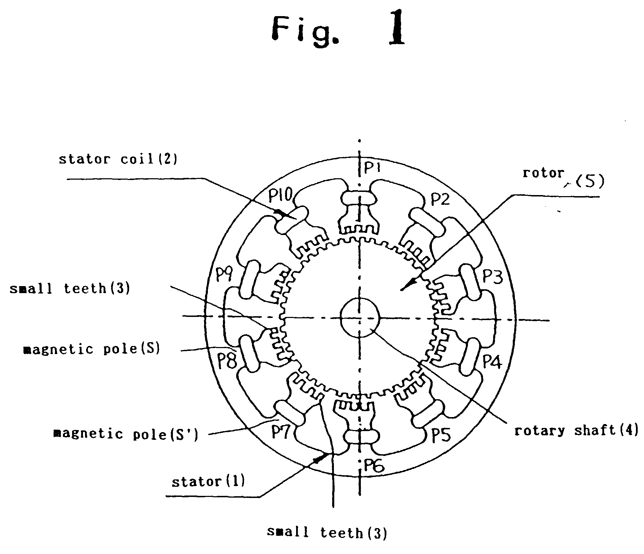

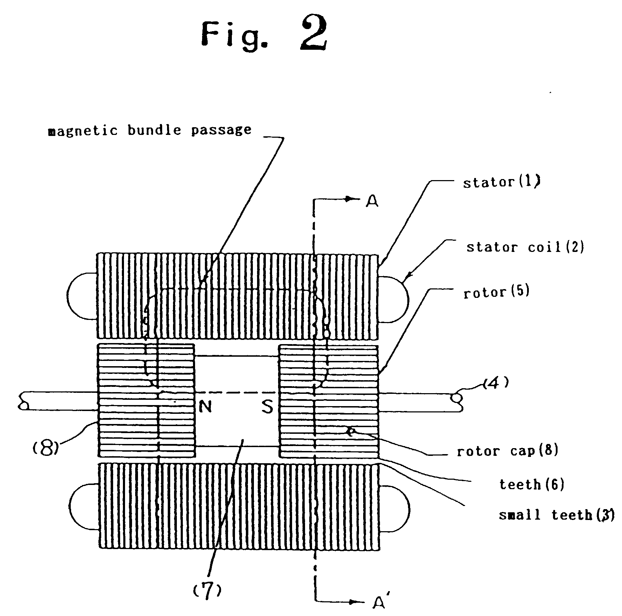

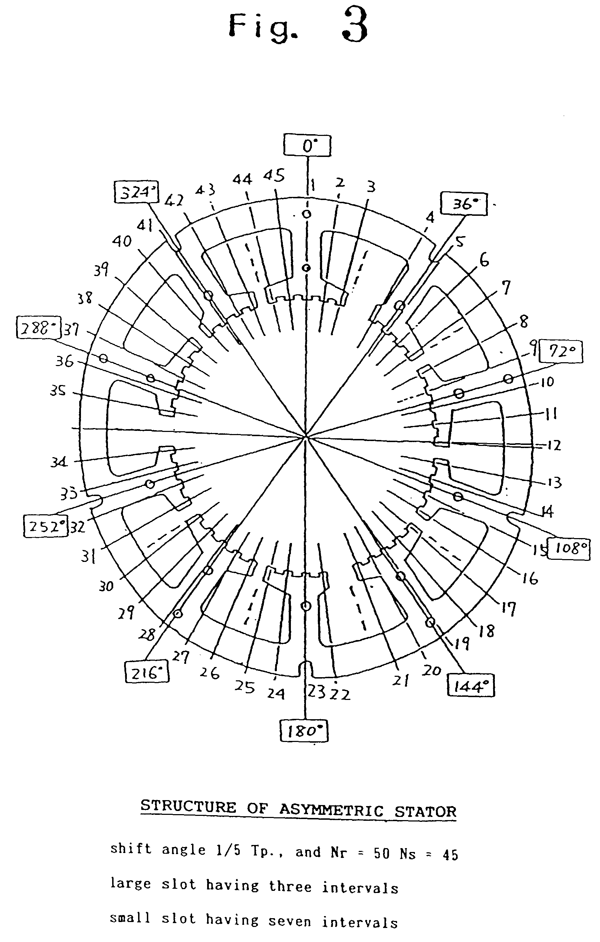

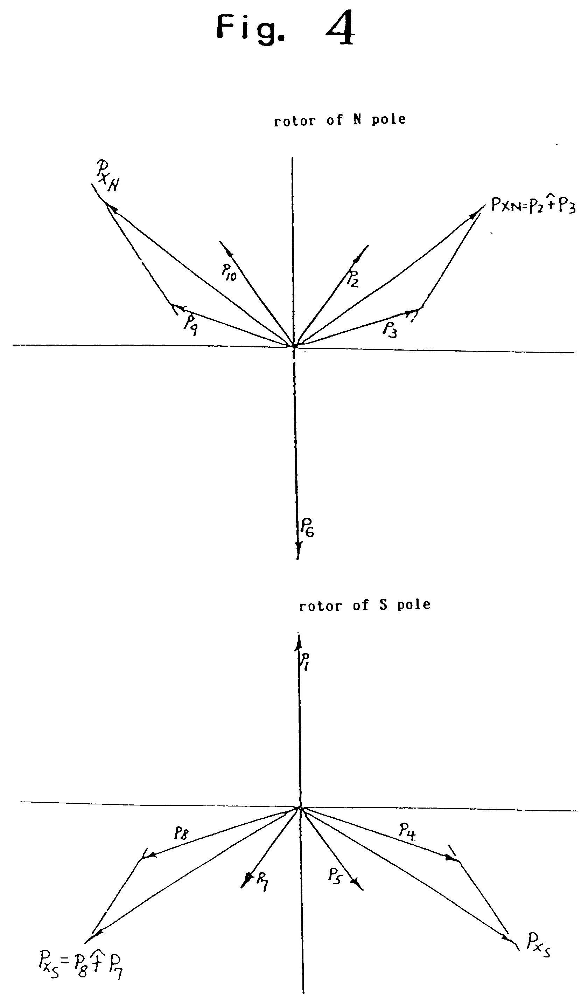

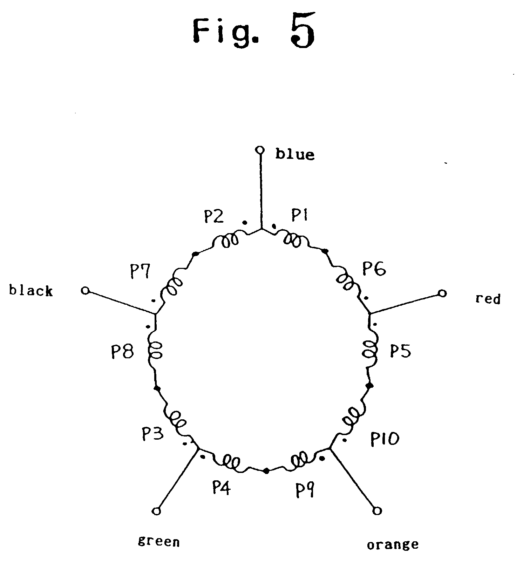

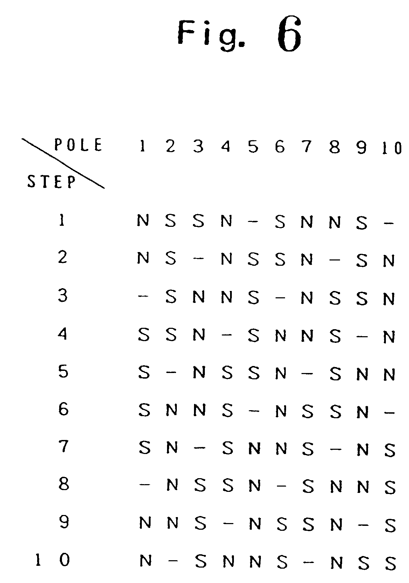

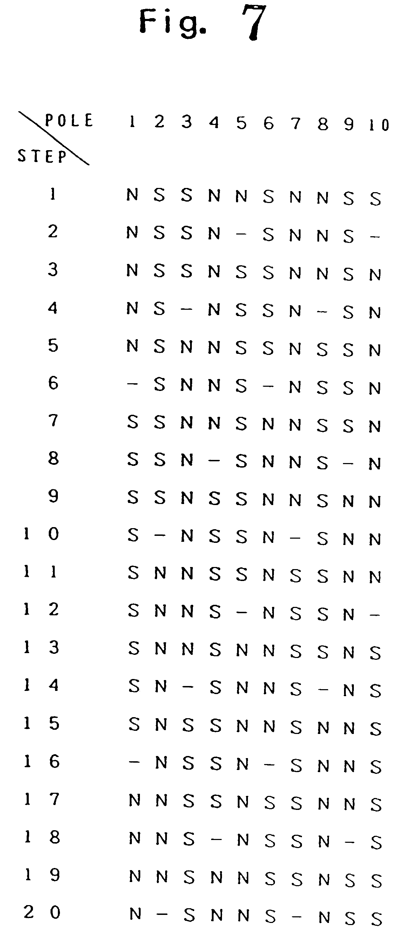

Fig. 1 is a cross sectional view showing one embodiment of the present invention; Fig. 2 is a longitudinal sectional view of the embodiment of the present invention; Fig. 3 is a front view of a stator system according to the embodiment of the present invention: Fig. 4 is a vector diagram of a rotor in the embodiment of the present invention; Fig. 5 is a wiring diagram according to the embodiment of the present invention; Fig. 6 is a chart showing the magnetic shift at fixed magnetic poles in full-step mode; and Fig. 7 is a chart showing the magnetic shift at the fixed magnetic poles in half-step mode.

### THE PREFERRED EMBODIMENTS OF THE PRESENT INVENTION

Preferred embodiments of the present invention will be described in more details referring to the accompanying drawings.

Figs. 1 and 2 illustrate in cross section a stepping motor according to the present invention. Fig. 1 is a cross sectional view taken along the line extending at a right angle to a rotary shaft 4. As shown, a stator 1 has ten fixed magnetic poles S, S' arranged inwardly thereof. The fixed magnetic pole S or S' has a stator coil 2 wound thereon and is provided at inward end with a set of small teeth 3. It is assumed that the total number of the small teeth 3 is NS. The rotary shaft 4 has a rotor 5 mounted at center thereto. The rotor 5 has a permanent magnet 7 mounted to the axial center thereof and two rotor caps 8 fitted to both sides of the magnet 7 respectively, as best shown in Fig. 2. The rotor caps 8 have a plurality of teeth 6 provided on the circumferential surface thereof. It is now assumed that the total number of the teeth 6 is NR. Fig. 1 is a cross sectional view taken along the line A-A of Fig. 2. The ten stator coils 2 are numbered from P1 to P10.

A first embodiment of the present invention is intended to have a five-phase stepping motor with the ten fixed magnetic poles S, S' improved in the torque stiffness, the step angle precision, and the efficiency of movement when NR=50 (where a shift angle between two adjacent fixed magnetic poles is 1/5Tp, Tp being a pitch of the small teeth 3). In particular, the number of the small teeth 3 of each alternate one of the ten fixed magnetic poles is increased by one while that of the other fixed magnetic poles is kept 4 (forming an asymmetrical fixed magnetic pole arrangement of the stator). Accordingly, the 4-teeth fixed magnetic pole S is disposed opposite to the 5-teeth fixed magnetic pole S' (Fig. 3).

The difference of the teeth between the rotor 5 and the fixed magnetic poles S,S' is 5 (as calculated by subtracting 4x5 from 50 and then, 5x5 from the result).

This embodiment also offers an improvement in the stability at torque equilibrium position. The reason is that while at least two adjacent fixed magnetic poles are polarized to N, other two adjacent fixed magnetic poles are turned to S (Fig. 6).

As compared with the first embodiment in which the improvement in the four different respects is ensured with the rotor having 40, 50, 80, 90, or 100 of the teeth, using such an asymmetrical arrangement of the ten fixed magnetic poles of the stator, a second embodiment is characterized by the shift angle between two adjacent fixed magnetic poles which is equal to 3/10 Tp or 7/10 Tp. Equally, the number of the small teeth 3 of every alternate one of the fixed magnetic poles is increased by one.

For determining an optimum degree of the step angle for performance of a stepping motor, the difference of teeth between the rotor and the stator is preferably 5 or 3.

As shown in Fig. 4, a radial stress exerted on the rotor caps is divided into three directions. The stress is evenly applied to the two rotor caps. The three directional components of the stress may less affect the manufacturing tolerance. Thereby, the step angle accuracy will increase and unwanted vibration will be reduced. This is because there are provided only three large distanced slots between the fixed magnetic poles. Fig. 6 shows the polarization of the fixed magnetic poles during a series of 20 consecutive steps. The full 20 steps perform one rotation of the rotary shaft 4. As apparent from Fig. 6, the number of N poles is identical to the number of S poles in the stepping motor at every position or step. This results in reduction of the hysteresis.

The step-by-step rotating movement will now be described referring to Figs. 5 and 6. Fig. 5 is a wiring diagram according to the embodiment of the present invention. The ten fixed magnetic poles are coupled to one another in a circular order of P1, P6, P5, P10, P9, P4, P3, P8, P7, and P2. Five, blue, red, orange, green, and black colored, terminals are provided between P1 and P2, P5 and P6, P9 and P10, P3 and P4, and P7 and P8 respectively. Fig. 6 is a diagram showing the polarization of the fixed magnetic poles in a full step mode. The dots in Fig. 5 represent the direction of coil windings.

Each of the blue, red, orange, green, and black colored terminals is coupled to a two-throw switch which normally stays in the neutral mode and is turned to one position for connecting to a positive source and to the other position for connecting to a negative source, although its switching circuit is not shown in Fig. 5. The switch is selectively connected to one of the three positions by a command signal from an unshown control unit. Accordingly, the ten magnetic poles are energized to have polarities as shown in Fig. 6 at each step. The switching action at the step produces the two polar states of the same number where at least two adjacent magnetic poles are polarized to S.

Fig. 7 is a diagram showing the polarization of the fixed magnetic poles at the steps in a half step mode.

As set forth above, the present invention with the foregoing arrangement allows the torque stiffness to be stable, the static torque to be equilibrated, and the step angle to be at high accuracy. In both the full and half step modes, the S and N poles of the same number are produced and also, at least two adjacent fixed magnetic poles are polarized to S at each step of the movement. This will minimize abnormal vibration during the rotating movement.

### APPLICABILITY TO INDUSTRIAL USE

As the specific teeth arrangements of the rotor and the stator are provided in a combination, the static torque acts in equilibrium and the step angle stays at high accuracy. In addition, the S and N poles become equal in the number in the full step mode, abnormal vibration during the rotating movement will be minimized.

## Claims

1. A multi-phase hybrid type stepping motor and drive arrangement, wherein the stepping motor has a rotor (5) provided with one or more permanent magnets (7) magnetized in the axial direction of a rotary shaft and two pole caps (8), one mounted to each end of the permanent magnet, each pole cap (8) being made of a soft magnetic material and having a plurality (NR) of teeth (6) arranged at equal intervals on the circumferential surface thereof, the teeth (6) of the two pole caps (8) being displaced by 1/2 of the teeth pitch (1/2 Tp) from each other, the motor also having a plurality of stator segments (1) of an asymmetrical form disposed around the rotor, each asymmetrical stator segment having ten fixed magnetic poles (S,S') thereof extending radially inwardly, each fixed magnetic pole (S,S') having a winding (2, P₁-P₁₀) wound thereon with no taps and being provided with two or more small teeth (3) arranged at equal intervals of the same pitch as of the teeth (6) of the rotor (5), the total number (NS) of the small teeth (3) of the asymmetrical stator segment (1) being determined by NS=5x(n0+n1), where n0 is the number of the small teeth (3) on each of five of the ten fixed magnetic poles and n1 is the number of the small teeth (3) on each of the remaining five fixed magnetic poles, n1 being not equal to n0, the fixed magnetic poles with the n1 small teeth (3) being arranged alternately with the fixed magnetic poles with the n0 small teeth (3), the n1 small teeth poles and the n0 small teeth poles being disposed opposite to each other about the axis of the rotary shaft, the relationship between the total number (NR) of the teeth (6) of the rotor (5) and the total number (NS) of the small teeth (3) of the stator segment (1) being expressed by NS ≥ 0·8 NR, the difference between NR and NS being calculated from NR-NS=K(S0-S1)+10(S1-1+B) where K is an integer from 2 to 5, S0 and S1 are smallest possible integers and may be equal, and B is a fraction of 1 so that 10B (ten times B) is always an integer, the ten stator windings (P₁-P₁₀) on their respective fixed magnetic poles being coupled to one another in the order of P1, P6, P5, P10, P9, P4, P3, P8, P7, and P2, where the stator windings are numbered P₁ to P₁₀ in a circular manner around the stator, five terminals being disposed between P1 and P2, P5 and P6, P9 and P10, P3 and P4, and P7 and P8 respectively, whereby the ten fixed magnetic poles (S,S') are polarised via the five terminals at each step of the rotating movement, such that North and South poles of the same number are generated and one or more pairs of adjacent fixed magnetic poles are turned to South poles.

## Patentansprüche

1. Mehrphasen-Hybrid-Schrittmotor und dessen Antriebseinrichtung, wobei der Schrittmotor einen Läufer (5) aufweist, der mit einem oder mehreren in Axialrichtung einer Läuferwelle magnetisierten Dauermagneten (7) und zwei Polkappen (8) versehen ist, die jeweils an einem Ende des Dauermagneten angebracht, aus weichmagnetischem Material hergestellt und mit einer Vielzahl (N_{R}) von Zähnen (6) versehen sind, die in gleichen Abständen auf ihrer Umfangsfläche angeordnet sind, wobei die Zähne (6) der einen Polkappe (8) gegenüber denen der anderen um die halbe Zahnteilung (1/2 Tp) versetzt sind, wobei der Motor ferner eine Vielzahl von Ständersegmenten (1) in asymmetrischer Form aufweist, die um den Läufer herum angeordnet sind, jedes asymmetrische Ständersegment zehn feststehende Magnetpole (S, S') aufweist, die sich radial nach innen erstrecken, jeder feststehende Magnetpol (S, S') eine Wicklung (2, P1-P10) aufweist, die ohne Abgriffe um ihn herumgewickelt sind, und mit zwei oder mehr kleinen Zähnen (3) versehen ist, die in gleichen Abständen mit gleicher Teilung wie die der Zähne (6) des Läufers (5) angeordnet sind, die Gesamtzahl (N_{S}) der kleinen Zähne (3) jedes asymmetrischen Ständersegments (1) durch die Gleichung N_{S}=5x(n₀+n₁) bestimmt ist, wobei n₀ die Anzahl der kleinen Zähne (3) auf jedem von fünf der zehn feststehenden Magnetpole und n₁ die Anzahl der kleinen Zähne (3) auf jedem der übrigen fünf feststehenden Magnetpole ist, wobei n₁ ungleich n₀ ist, die feststehenden Magnetpole mit den n₁ kleinen Zähnen (3) mit den feststehenden Magnetpolen mit den n₀ kleinen Zähnen (3) abwechselnd angeordnet sind, die Pole mit den n₁ kleinen Zähnen und die Pole mit den n₀ kleinen Zähnen einander diametral zur Achse der Läuferwelle gegenüberliegend angeordnet sind, der Zusammenhang zwischen der Gesamtzahl (N_{R}) der Zähne (6) des Läufers (5) und der Gesamtzahl (N_{S}) der kleinen Zähne (3) des Ständersegments (1) sich durch die Gleichung N_{S} ≥ 0,8 N_{R} ergibt, die Differenz von N_{R} und N_{S} sich aus der Gleichung N_{R}-N_{S}=K(S₀-S₁)+10(S₁-1+B) ergibt, wobei K eine ganze Zahl von 2 bis 5, S₀ und S₁ die kleinsten möglichen ganzen Zahlen sind und gleich sein können und B ein Bruchteil von 1 ist, so daß 10B (10 mal B) stets eine ganze Zahl ist, die zehn Ständerwicklungen (P1-P10) auf ihrem jeweiligen feststehenden Magnetpol miteinander in der Reihenfolge P1, P6, P5, P10, P9, P4, P3, P8, P7 und P2 verbunden sind, wobei die Ständerwicklungen in zirkularer Weise um den Ständer herum mit P1 bis P10 durchnumeriert sind, zwischen den Wicklungen P1 und P2, P5 und P6, P9 und P10, P3 und P4 sowie P7 und P8 jeweils einer von fünf Anschlüssen angeordnet ist, so daß die zehn feststehenden Magnetpole (S, S') über die fünf Anschlüsse bei jedem Schritt der Drehbewegung so gepolt werden, daß die gleiche Anzahl von Nord- und Südpolen gebildet und ein oder mehr Paare benachbarter feststehender Magnetpole als Südpole geschaltet werden.

## Revendications

1. Moteur pas-à-pas du type hybride multiphasé et agencement d'entraînement, dans lesquels le moteur pas-à-pas comprend un rotor (5) comportant un ou plusieurs aimants permanents (7) magnétisés dans la direction axiale d'un arbre rotatif, et deux capuchons polaires (8), un monté à chaque extrémité de l'aimant permanent, chaque capuchon polaire (8) étant fait en un matériau magnétique doux et comportant une pluralité (NR) de dents (6) disposées à intervalles égaux sur la surface circonférentielle de celui-ci, les dents (6) des deux capuchons polaires (8) étant décalées d'1/2 pas de dents (1/2 Tp) les unes par rapport aux autres, le moteur comprenant également une pluralité de segments de stator (1) de forme asymétrique disposés autour du rotor, chaque segment de stator asymétrique comportant dix pôles magnétiques fixes (S, S') de celui-ci qui s'étendent radialement vers l'intérieur, chaque pôle magnétique fixe (S, S') comprenant un enroulement (2, P1 à P10) enroulé sur celui-ci, sans comporter de prises, et comportant deux ou plusieurs petites dents (3) disposées à intervalles égaux, de pas identique à celui des dents (6) du rotor (5), le nombre total (NS) des petites dents (3) du segment de stator asymétrique (1) étant déterminé par NS = 5 x (n0 + n1), n0 étant le nombre des petites dents (3) sur chacun de cinq des dix pôles magnétiques fixes, et nl étant le nombre des petites dents (3) sur chacun des cinq pôles magnétiques fixes restants, nl n'étant pas égal à n0, les pôles magnétiques fixes avec les nl petites dents (3) étant disposés de façon alternée par rapport aux pôles magnétiques fixes avec les n0 petites dents (3), les pôles avec n1 petites dents et les pôles avec n0 petites dents étant disposés à l'opposé les uns des autres autour de l'axe de l'arbre rotatif, la relation entre le nombre total (NR) des dents (6) du rotor (5) et le nombre total (NS) des petites dents (3) du segment de stator (1) étant exprimée par NS ≥ 0,8 NR, la différence entre NR et NS étant calculée à partir de NR - NS = K (S0 - S1) + 10 (S1 - 1 + B), K étant un entier compris entre 2 et 5, S0 et S1 étant les plus petits entiers possibles et pouvant être égaux, et B étant une fraction de 1, de telle sorte que 10B (dix fois B) soit toujours un entier, les dix enroulements de stator (P1 à P10) sur leurs pôles magnétiques fixes respectifs étant couplés les uns aux autres dans l'ordre suivant : P1, P6, P5, P10, P9, P4, P3, P8, P7 et P2, les enroulements de stator étant numérotés de P1 à P10 de façon circulaire autour du stator, cinq bornes étant disposées entre P1 et P2, P5 et P6, P9 et P10, P3 et P4, et P7 et P8, respectivement, grâce à quoi les dix pôles magnétiques fixes (5,5') sont magnétisés par l'intermédiaire des cinq bornes lors de chaque pas du mouvement de rotation, de telle sorte que des pôles Nord et Sud en même nombre soient générés et qu'une ou plusieurs paires de pôles magnétiques fixes adjacents soient changées en pôles Sud.
